# FASCICULE DE BREVET EUROPEEN

(11) **EP 4 495 009 B1**
(45) Date de publication et mention de la délivrance du brevet: **27.08.2025**
(21) Numéro de dépôt: 24170339.6
(22) Date de dépôt: 15.04.2024
(51) Int. Cl.: B64D 31/09, B64C 27/06

(54) **PROCÉDÉ D'ASSISTANCE AU PILOTAGE D'UN GIRAVION ET GIRAVION AINSI ÉQUIPE**
VERFAHREN ZUR UNTERSTÜTZUNG DER STEUERUNG EINES DREHFLÜGLERS UND DREHFLÜGLER DAMIT
METHOD FOR ASSISTING THE PILOTING OF A ROTORCRAFT AND ROTORCRAFT THUS EQUIPPED

(30) Priorité: 21.07.2023 FR 2307870
(43) Date de publication de la demande: 22.01.2025
(73) Titulaire: Airbus Helicopters, 13725 Marignane Cedex (FR)
(72) Inventeur: CERQUEIRA, Stéphane, 13510 EGUILLES (FR)
(74) Mandataire: GPI Brevets

(56) Documents cités:
- EP-A1- 3 693 582
- EP-A1- 3 738 888
- EP-A1- 3 951 150
- US-A- 4 817 046
- US-A1- 2022 025 941

## Description

La présente invention concerne un procédé d'assistance au pilotage d'un giravion, un système d'assistance et un giravion ainsi équipé.

Un tel giravion est muni d'un groupe de motorisation comportant au moins deux moteurs et au moins un rotor de sustentation entraîné en rotation par le groupe de motorisation.

Par ailleurs, le fonctionnement des moteurs est géré par un système de régulation. Ce système de régulation permet de mettre en œuvre un mode de fonctionnement des moteurs communément désigné mode AEO (d'après l'acronyme désignant en anglais « All Engine Opérative ») dans lequel tous les moteurs du groupe de motorisation sont opérationnels et transmettent chacun une puissance motrice aux organes consommateurs de puissance du giravion tels que le ou les rotors.

Afin de diminuer la consommation de carburant des moteurs thermiques de l'aéronef, un mode de fonctionnement dit « économique » peut être utilisé, principalement durant une phase de vol de croisière. Selon ce mode de fonctionnement économique, un seul moteur thermique fournit la puissance nécessaire pour entraîner en rotation le ou les rotors du giravion. Le ou les autres moteurs thermiques ne fournissent pas de puissance mécanique significative, voire ne fournissent aucune puissance.

Selon une première variante, un seul moteur thermique fonctionne et assure seul l'entraînement en rotation du rotor du giravion. Le ou les autres moteurs thermiques sont arrêtés et ne sont pas alimentés en carburant. Dans le cas d'un turbomoteur à turbine libre, les organes tournants du générateur de gaz peuvent toutefois être maintenus en rotation par un moteur électrique pour faciliter et accélérer le redémarrage du moteur.

Selon une seconde variante, tous les moteurs sont démarrés et alimentés en carburant, mais un seul moteur thermique fournit une puissance mécanique significative de sorte à entraîner en rotation le ou les rotors du giravion. Le ou les autres moteurs thermiques sont démarrés, mais fonctionnent selon un état de fonctionnement dit « de super ralenti » et ne fournissent à ce titre aucune puissance mécanique.

Quelle que soit la variante de ce mode de fonctionnement économique, le fonctionnement des moteurs thermiques est donc asymétrique, les moteurs thermiques ne fonctionnant pas de façon identique.

Ainsi, le document EP3738888 divulgue un procédé de fonctionnement d'un giravion comprenant une pluralité de moteurs conçus pour fournir une puissance motrice à au moins un rotor.

Par ailleurs, un mode de fonctionnement asymétrique est mis en œuvre, dans lequel au moins un premier moteur est un moteur dit « actif », c'est-à-dire fournissant une puissance motrice à au moins un rotor, et au moins un deuxième moteur est un moteur dit « inactif », c'est-à-dire ne fournissant sensiblement aucune puissance motrice.

Ce procédé comprend la surveillance d'une panne du moteur actif. En présence d'une telle panne, la puissance de sortie du moteur inactif est automatiquement augmentée. Le moteur inactif réactivé fonctionne alors selon un régime dit « OEI » (d'après l'acronyme désignant en anglais « One Engine Inoperative »). Un moteur disponible fonctionnant en mode OEI fournit une puissance suffisante jusqu'à l'atterrissage, pour permettre temporairement au giravion de progresser en vol malgré l'indisponibilité de l'un des moteurs.

Durant la phase transitoire allant de la panne du moteur actif à la réactivation du moteur inactif, la puissance mécanique transmise au(x) rotor(s) est alors temporairement nulle ou fortement réduite.

Le document EP 3 693 582 divulgue quant à lui des procédés et des systèmes permettant de faire fonctionner un aéronef muni d'au moins deux moteurs. Le procédé consiste à faire fonctionner les moteurs dans un régime de fonctionnement asymétrique.

Le document US 2022/025941 décrit quant à lui un ensemble à embrayage multimode à sécurité intégrée positionné dans un groupe motopropulseur d'un giravion. Cet ensemble comprend une roue libre.

Le document EP 3 951 150 concerne un procédé de commande d'un aéronef, comprenant un premier moteur, un deuxième moteur, au moins un rotor et une transmission interposée entre le rotor et les premier et deuxième moteurs.

La transmission comprend une première et une deuxième entrée reliées respectivement à un premier organe de sortie du premier moteur et à un deuxième organe de sortie du deuxième moteur.

Le document US 4 817 046 décrit un procédé de détection de panne moteur dans un aéronef multimoteur. Une telle détection est basée sur des dépassements de seuils notamment pour le couple moteur (Q), la vitesse du générateur de gaz (NG), la température de l'étage interne de la turbine de puissance (T5), la vitesse de la turbine de puissance (NF).

La présente invention a alors pour objet de proposer un procédé et un système d'assistance permettant de contenir la charge de travail du ou des pilotes durant la phase transitoire.

Ainsi, un but de l'invention est d'assister les pilotes et leur permettre d'effectuer d'autres tâches durant cette phase transitoire, notamment lors d'un vol avec une faible visibilité.

L'invention concerne donc un procédé d'assistance au pilotage d'un giravion comportant un premier moteur et un deuxième moteur aptes à transmettre chacun, hors cas de panne, un couple moteur à au moins un rotor assurant au moins une sustentation du giravion dans l'air, le giravion comportant des organes aérodynamiques permettant de piloter le giravion, le procédé d'assistance comportant les étapes suivantes :
- régulation asymétrique du premier moteur et du deuxième moteur, le premier moteur fournissant seul une puissance motrice audit au moins un rotor, le deuxième moteur fonctionnant selon un régime d'attente dans lequel le deuxième moteur ne fournit aucune puissance motrice audit au moins un rotor,
- identification d'une défaillance moteur du premier moteur à l'aide d'un contrôleur de défaillance, et
- en présence d'une dite défaillance moteur du premier moteur, accélération du deuxième moteur depuis le régime d'attente jusqu'à un régime de synchronisation dans lequel le deuxième moteur transmet seul la puissance motrice audit au moins un rotor.

Ce procédé est remarquable en ce que, suite à l'identification de la défaillance moteur du premier moteur et tant que le régime de fonctionnement du deuxième moteur est inférieur à un régime de synchronisation, le procédé d'assistance comporte les étapes suivantes exécutées plusieurs fois ou se répétant :
- détection périodique en vol de valeurs courantes d'au moins deux paramètres d'état au moyen d'au moins deux senseurs distincts, lesdits au moins deux paramètres d'état étant de natures distinctes et comportant un premier paramètre d'état représentatif d'une condition physico-chimique environnementale ou d'une position du giravion par rapport à un environnement extérieur et un deuxième paramètre d'état représentatif d'un fonctionnement du giravion, et
- génération périodique avec un contrôleur de pilotage automatique d'ordres de commande pour commander des actionneurs reliés aux organes aérodynamiques durant une phase de vol en autorotation pilotée automatiquement, la génération périodique mettant en œuvre une loi de commande prédéterminée fonction desdits au moins deux paramètres d'état, la loi de commande prédéterminée étant spécifiquement applicable au procédé d'assistance.

Autrement dit, un tel procédé d'assistance permet de piloter automatiquement un giravion lors d'une phase de vol en autorotation à la suite de la défaillance du moteur actif lors d'un vol asymétrique. En outre, un tel giravion peut comporter un ou plusieurs premiers moteurs initialement actifs et un ou plusieurs deuxièmes moteurs initialement inactifs. Néanmoins pour plus de clarté et à des fins de simplification, le giravion est décrit comme présentant un premier et un deuxième moteur de façon non exhaustive.

Ainsi, la génération périodique des ordres de commande est mise en œuvre automatiquement dès que le contrôleur de défaillance détecte une défaillance moteur du premier moteur le rendant inopérant.

Une telle phase de vol en autorotation se termine lorsque le deuxième moteur, initialement inactif, est devenu actif et transmet ainsi le couple moteur requis audit au moins un rotor.

Le pilote peut alors ensuite piloter le giravion en manœuvrant des organes de commande pour commander les actionneurs reliés aux organes aérodynamiques. Le pilote peut ainsi poursuivre le vol avec seulement le deuxième moteur devenu actif ou décider d'effectuer un atterrissage.

La loi de commande permettant de générer les ordres de commande lors de la génération périodique peut être avantageusement prédéterminée par des essais, des tests en vol et/ou des simulations. Cette loi de commande peut par exemple consister en un algorithme informatique, une intelligence artificielle, une formule mathématique, une table de valeurs ou un abaque. La loi de commande peut utiliser les valeurs courantes d'au moins deux paramètres d'état de manière à générer automatiquement les ordres de commande sans action particulière du ou des pilotes qui peuvent ainsi se concentrer sur d'autres actions comme la surveillance du terrain, la détection d'obstacles, le redémarrage et la synchronisation du deuxième moteur et d'une boite de transmission de puissance, etc.....

En outre, les valeurs des paramètres d'état peuvent être évaluées périodiquement en vol, avec une fréquence de détection prédéterminée, par des senseurs comportant des capteurs dédiés ou des capteurs mutualisés avec d'autres systèmes du giravion.

Le contrôleur de défaillance et le contrôleur de pilotage automatique peuvent chacun comprendre, par exemple, au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur... Le contrôleur de défaillance et le contrôleur de pilotage automatique peuvent former un seul et même contrôleur.

En outre, le régime de synchronisation du deuxième moteur peut être défini par un différentiel de vitesses de rotation entre deux arbres liés par une roue libre. Une telle roue libre permet au(x) deuxième(s) moteur(s) d'entraîner en rotation une chaîne cinématique de transmission de puissance. Un couple moteur peut ainsi être transmis d'un arbre de sortie du deuxième moteur à un arbre d'entrée d'une boîte principale de transmission de puissance.

Alternativement, tant que l'arbre de sortie du deuxième moteur tourne à une vitesse inférieure à celle de l'arbre d'entrée de la boîte principale de transmission de puissance, la roue libre ne permet pas à ce deuxième moteur de transmettre un couple moteur à la chaîne cinématique de transmission et donc au(x) rotor(s).

En outre, les premier et deuxième moteur peuvent être des moteurs thermiques et l'accélération du deuxième moteur depuis le régime d'attente jusqu'à un régime de synchronisation peut être réalisée par exemple en augmentant un débit de carburant d'alimentation du deuxième moteur. Un doseur de carburant est alors piloté par un contrôleur en fonction de la vitesse de rotation de l'arbre de sortie du deuxième moteur et celle de l'arbre d'entrée de la boîte principale de transmission de puissance.

En pratique, le premier paramètre d'état peut être choisi parmi le groupe comportant une température de l'air, une pression atmosphérique, une altitude, une densité de l'air, une vitesse air du giravion par rapport à l'air, une vitesse sol du giravion par rapport au sol, une accélération verticale du giravion par rapport au sol et une assiette du giravion dans un repère terrestre.

Ainsi, les valeurs courantes de ce premier paramètre d'état, lorsqu'il est représentatif d'une condition physico-chimique environnementale, peuvent être liées à l'air se trouvant à proximité du giravion et/ou au déplacement du giravion par rapport à l'air. Autrement dit, la condition physico-chimique environnementale peut ainsi être une température de l'air extérieur, une pression atmosphérique de l'air extérieur, une densité de l'air extérieur, une vitesse air du giravion par rapport à l'air extérieur.

Alternativement, les valeurs courantes de ce premier paramètre d'état, lorsqu'il est représentatif d'une position du giravion par rapport à un environnement extérieur, peuvent être liés à la position ou au déplacement du giravion par rapport au sol. Autrement dit, la position du giravion par rapport à un environnement extérieur peut ainsi être une altitude du giravion par rapport au niveau de la mer, une vitesse sol du giravion par rapport au sol, une accélération verticale du giravion par rapport au sol et une assiette du giravion dans un repère terrestre.

En outre, le deuxième paramètre d'état peut être choisi parmi le groupe comportant une vitesse de rotation NR dudit au moins un rotor, une puissance transmise par le deuxième moteur audit au moins un rotor, un couple moteur transmis par le deuxième moteur audit au moins un rotor, une vitesse de rotation d'un générateur de gaz N1 du deuxième moteur, une vitesse de rotation N2 d'une turbine libre du deuxième moteur, une température TET des gaz à l'entrée d'une turbine haute pression d'un générateur de gaz du deuxième moteur et une température T45 des gaz à l'entrée d'une turbine libre du deuxième moteur.

Les valeurs courantes de ce deuxième paramètre d'état sont donc liées à un fonctionnement d'un organe interne au giravion et sont ainsi d'une nature distincte de celle du premier paramètre d'état.

Avantageusement, le premier paramètre d'état peut être la vitesse air du giravion par rapport à l'air et le deuxième paramètre d'état peut être la vitesse de rotation NR dudit au moins un rotor.

Une telle combinaison des premier et deuxième paramètres d'état permet en effet à la loi de commande de générer des ordres de commande garantissant la réalisation en sécurité d'une phase de vol en autorotation du giravion.

Selon un exemple de réalisation de l'invention, les organes aérodynamiques peuvent comporter des pales dudit au moins un rotor, les actionneurs commandant au moins un pas des pales.

Ainsi, le procédé d'assistance permet de piloter le pas des pales du ou des rotors. Les actionneurs peuvent notamment agir directement ou via une chaîne cinématique sur des plateaux de commande de pas et des bielles de pas reliées aux pales.

En pratique, les ordres de commande peuvent être transmis aux actionneurs pour générer une diminution collective et identique d'un pas des pales et/ou une modification cyclique du pas des pales.

Une telle baisse collective du pas des pales permet notamment de maintenir constante ou d'augmenter la vitesse de rotation du rotor et la modification cyclique du pas des pales permet de contrôler et de stabiliser la trajectoire de descente du giravion.

En outre, le procédé d'assistance peut comporter un affichage sur un afficheur d'au moins une information choisie parmi le groupe comportant les valeurs courantes desdits au moins deux paramètres d'état et d'une information représentative d'une transmission des ordres de commande du contrôleur de pilotage automatique vers les actionneurs.

Un tel affichage permet en outre au pilote de suivre les actions opérées par le contrôleur de pilotage automatique et les actionneurs. Cet afficheur peut, par exemple, comprendre un écran permettant d'afficher des cadrans avec chacun une aiguille mobile ou des échelles avec chacune un index mobile formant des informations porteuses des valeurs courantes desdits au moins deux paramètres d'état.

La présente invention a aussi pour objet un programme d'ordinateur comprenant des instructions qui, lorsque le programme est exécuté, conduisent à mettre en œuvre le procédé d'assistance précité.

Le programme est par exemple exécuté par un ordinateur ou un calculateur, comprenant au moins un processeur, au moins un circuit intégré, au moins un système programmable, au moins un circuit logique, et une mémoire, ces exemples ne limitant pas la portée donnée à l'expression « ordinateur » ou « calculateur ».

La mémoire permet de stocker le programme d'ordinateur ainsi que différentes informations utilisées par le programme d'ordinateur, à savoir les consignes de commande à transmettre auxdits actionneurs, les valeurs courantes desdits au moins deux paramètres d'état et la loi de commande prédéterminée à mettre en œuvre.

L'invention se rapporte également à un giravion comportant un premier moteur et un deuxième moteur aptes à transmettre chacun, hors cas de panne, un couple moteur à au moins un rotor assurant au moins une sustentation du giravion dans l'air.

Selon l'invention, un tel giravion est remarquable en ce qu'il comporte un système d'assistance au pilotage du giravion configuré pour mettre en œuvre le procédé d'assistance précité, le système comportant le contrôleur de défaillance, le contrôleur de pilotage automatique, les actionneurs et lesdits au moins deux senseurs.

Un tel système est alors intégré à un giravion et constitue à ce titre un équipement du giravion. Le système d'assistance au pilotage peut alors être relié à un dispositif de gestion de vol du giravion. Le contrôleur de pilotage automatique peut en outre être dédié au système d'assistance au pilotage ou être mutualisé avec un dispositif de pilotage automatique du giravion utilisé classiquement lors d'un vol du giravion et hors cas de panne d'un moteur.

L'invention et ses avantages apparaîtront avec plus de détails dans le cadre de la description qui suit avec des exemples donnés à titre illustratif en référence aux figures annexées qui représentent :
la figure 1, un schéma de principe d'un giravion muni d'un système d'assistance permettant de mettre en œuvre le procédé d'assistance conforme à l'invention, et
la figure 2, un logigramme illustrant les étapes d'un procédé d'assistance conforme à l'invention.

Les éléments présents dans plusieurs figures distinctes sont affectés d'une seule et même référence.

Comme déjà évoqué, l'invention concerne un procédé d'assistance au pilotage d'un giravion.

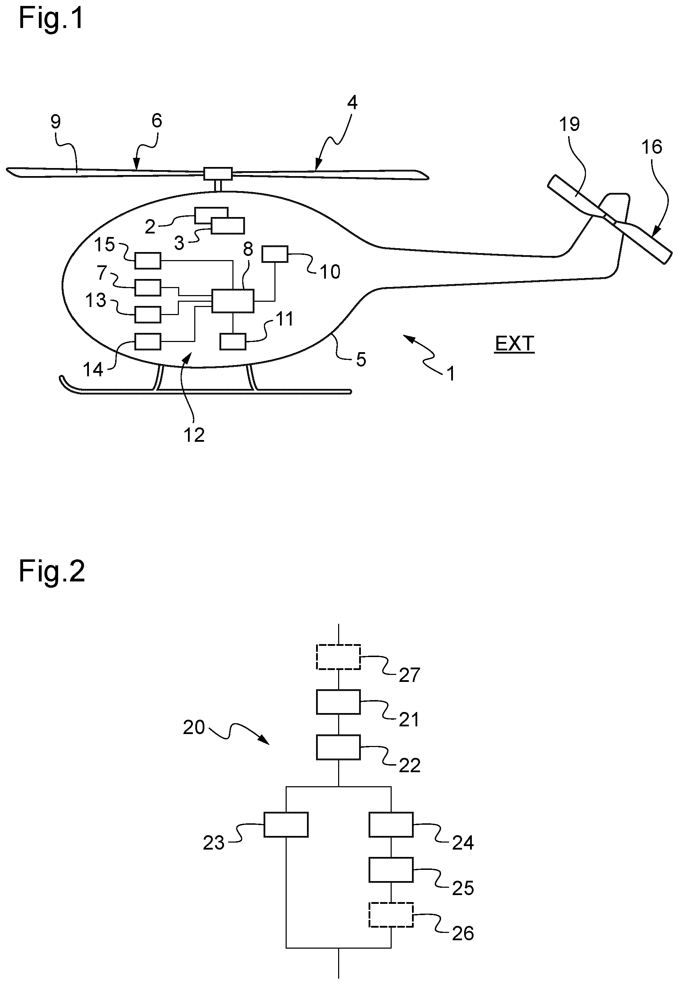

Tel que représenté à la figure 1, un tel giravion 1 comporte au moins deux moteurs, dont un premier moteur 2 et un deuxième moteur 3, aptes à transmettre chacun, hors cas de panne, un couple moteur à au moins un rotor principal 4 assurant au moins une sustentation dans l'air du giravion 1. Les moteurs 2, 3 sont ainsi connectés à une chaîne cinématique de transmission de puissance débouchant sur au moins un rotor principal 4.

Le giravion 1 comporte également des organes aérodynamiques 6 permettant de piloter le giravion 1 dans l'air. Ces organes aérodynamiques 6 peuvent comporter au moins une pale 9 du ou des rotors principaux 4, au moins une pale 19 d'un rotor arrière 16, et/ou encore des volets mobiles agencés par exemple sur un empennage, sur une dérive, sur les pales 9 du ou des rotors principaux 4, sur les pales 19 du rotor arrière 16 ou encore sur une aile du giravion 1.

De tels volets mobiles peuvent alors permettre de modifier la portance globale générée par les organes aérodynamiques 6 et/ou de participer au contrôle des mouvements du giravion 1, notamment lors d'une phase de vol en autorotation du giravion 1.

En outre, un tel giravion 1 comporte également des actionneurs 10 comportant par exemple des servocommandes et/ou des vérins permettant de déplacer directement ou indirectement les organes aérodynamiques 6. Par exemple, des vérins série et parallèle déplacent une chaîne mécanique pilotant une servocommande en prise sur un ensemble de plateaux cyclique relié par des bielles de pas à des pales 9.

Ces actionneurs 10 peuvent ainsi recevoir des ordres de commande générés par un contrôleur de pilotage automatique 8. Le contrôleur de pilotage automatique 8 peut comprendre, par exemple, une unité de commande d'un système de pilotage automatique connue sous l'acronyme AFCS désignant en langue anglaise « Automatic Flight Control System ».

Par ailleurs, un tel giravion 1 comporte également au moins deux senseurs 13, 14 distincts l'un de l'autre, ces senseurs 13, 14 émettant des signaux analogiques ou numériques par voie filaire ou non filaire vers le contrôleur de pilotage automatique 8.

Le ou les senseurs 13 permettent de détecter en vol des valeurs courantes d'un premier paramètre d'état représentatif d'une condition physico-chimique environnementale du giravion 1 ou d'une position du giravion 1 par rapport à un environnement extérieur EXT. Le ou les senseurs 13 peuvent notamment présenter des capteurs de position, de vitesse ou d'accélération du giravion 1, une centrale inertielle ou un système anémobarométrique.

En outre, le premier paramètre d'état peut être choisi parmi le groupe comportant une température de l'air, une pression atmosphérique, une altitude, une densité de l'air, une vitesse air du giravion 1 par rapport à l'air, une vitesse sol du giravion 1 par rapport au sol, une accélération verticale du giravion 1 par rapport au sol et une assiette du giravion 1.

Le ou les senseurs 13 peuvent ainsi comporter un thermomètre mesurant la température de l'air, un baromètre mesurant la pression atmosphérique à l'extérieur du giravion 1 et un altimètre mesurant l'altitude du giravion 1.

La densité de l'air peut quant à elle être estimée à l'aide des valeurs de la température de l'air et de la pression atmosphérique.

Le système anémobarométrique peut quant à lui permettre de mesurer la vitesse air du giravion 1 par rapport à l'air, l'altitude.

Le ou les senseurs 14 permettent quant à eux de détecter en vol des valeurs courantes d'un deuxième paramètre d'état représentatif d'un fonctionnement du giravion 1.

Le deuxième paramètre d'état peut être choisi parmi le groupe comportant une vitesse de rotation NR dudit au moins un rotor 4, une puissance transmise par le deuxième moteur 3 audit au moins un rotor 4 via la chaîne cinématique de transmission, un couple moteur transmis par le deuxième moteur 3 audit au moins un rotor 4 via la chaîne cinématique de transmission, une vitesse de rotation d'un générateur de gaz N1 du deuxième moteur 3, une vitesse de rotation N2 d'une turbine libre du deuxième moteur 3, une température TET des gaz à l'entrée d'une turbine haute pression d'un générateur de gaz dudit deuxième moteur 3 et une température T45 des gaz à l'entrée d'une turbine libre du deuxième moteur 3.

Le ou les senseurs 14 peuvent notamment présenter des capteurs de position, de vitesse ou d'accélération pour mesurer ou déterminer la vitesse de rotation NR, des capteurs de position, de vitesse ou d'accélération pour mesurer ou déterminer une vitesse de rotation du générateur de gaz N1 du deuxième moteur 3, des capteurs de position, de vitesse ou d'accélération pour mesurer ou déterminer une vitesse de rotation N2 d'une turbine libre du deuxième moteur 3 ou encore d'un arbre de sortie du deuxième moteur 3, un couplemètre mesurant un couple transmis par l'arbre de sortie du deuxième moteur 3 audit au moins un rotor 4.

Le ou les senseurs 14 peuvent également présenter des capteurs de température tels des thermomètres mesurant la température TET des gaz à l'entrée d'une turbine haute pression d'un générateur de gaz du deuxième moteur 3 et la température T45 des gaz à l'entrée d'une turbine libre du deuxième moteur 3.

Par capteurs, on entend ici des capteurs physiques capables de mesurer directement le paramètre en question, mais aussi un système pouvant comprendre un ou plusieurs capteur(s) physique(s) ainsi que des moyens de traitement du signal permettant de fournir une estimation du paramètre à partir des mesures fournies par ce ou ces capteurs physiques. De manière similaire, on désignera par valeur courante ou mesure de ce paramètre aussi bien une mesure brute d'un capteur physique qu'une valeur obtenue par un traitement de signal à partir de cette mesure brute.

Par ailleurs, lesdits au moins deux senseurs 13, 14 permettent de mesurer et de transmettre au contrôleur de pilotage automatique 8 des données variant en fonction des ordres de commande transmis aux actionneurs 10. Ces données permettent de mettre en œuvre une boucle de régulation visant, par exemple, à assurer une phase de vol en autorotation grâce à la loi de commande prédéterminée.

En outre, le giravion 1 peut comporter au moins un système de mission 15 relié par voie filaire ou non filaire au contrôleur de pilotage automatique 8 et éventuellement auxdits au moins deux senseurs 13, 14. Un tel système de mission 15 est configuré pour paramétrer le contrôleur de pilotage automatique 8 et éventuellement lesdits au moins deux senseurs 13, 14 en fonction de contraintes de vol liées à la mission que doit effectuer le giravion 1 ou de préférences de pilotage.

Ce système de mission 15 peut notamment comporter une interface homme-machine permettant au pilote de saisir des préférences de pilotage relatives à une phase de vol en autorotation. De telles préférences peuvent par exemple permettre d'adapter ou de remplacer la loi de commande prédéterminée par une autre loi de commande prédéterminée.

En outre, le giravion 1 peut comporter un afficheur 11 relié par voie filaire ou non filaire au contrôleur de pilotage automatique 8 et éventuellement auxdits au moins deux senseurs 13, 14.

Un tel afficheur 11 peut notamment permettre d'afficher des informations visibles par un pilote telles que les valeurs courantes desdits au moins deux paramètres d'état et/ou une information représentative d'une transmission des ordres de commande du contrôleur de pilotage automatique 8 vers les actionneurs 10. Ainsi, le pilote peut notamment être informé que le contrôleur de pilotage automatique 8 est actif et pilote le giravion 1 pour effectuer une phase de vol en autorotation.

Par ailleurs, en cas de panne du premier moteur 2, un procédé d'assistance 20 au pilotage du giravion 1 tel que représenté à la figure 2 peut être mis en œuvre.

Un tel procédé d'assistance 20 comporte ainsi une pluralité d'étapes et notamment une régulation 21 asymétrique du premier moteur 2 et du deuxième moteur 3 mise en œuvre par exemple par le système AFCS. Une telle régulation 21 permet ainsi de piloter des doseurs de carburant des moteurs 2,3 pour que le premier moteur 2 fournisse seul une puissance motrice audit au moins un rotor 4 et pour que le deuxième moteur 3 fonctionne à un régime d'attente dans lequel ce deuxième moteur 3 ne fournit aucune puissance motrice audit au moins un rotor 4.

Le procédé d'assistance 20 comporte ensuite une identification 22 d'une défaillance moteur du premier moteur 2 à l'aide d'un contrôleur de défaillance 7 éventuellement relié à au moins un senseur présentant un capteur de position, de vitesse ou d'accélération ou un capteur de température configuré pour mesurer un paramètre lié au fonctionnement du premier moteur 2.

Un tel contrôleur de défaillance 7 est alors un contrôleur usuel capable d'effectuer des opérations de contrôle classique et notamment de comparer la valeur courante générée par un capteur avec une valeur de seuil puis d'émettre éventuellement un signal d'alarme en cas de franchissement de cette valeur de seuil qui peut être par exemple une couple moteur minimal.

Le procédé d'assistance 20 comporte alors une accélération 23 mise en œuvre par exemple par le système AFCS pour augmenter le régime de fonctionnement du deuxième moteur 3 depuis le régime d'attente jusqu'à un régime de synchronisation dans lequel ce deuxième moteur 3 fournit seul une puissance motrice audit au moins un rotor 4.

Une telle accélération 23 peut être mise en œuvre par le système AFCS pilotant au moins un doseur de carburant du deuxième moteur 3 pour que son régime augmente et passe du régime d'attente au régime de synchronisation. Une fois ce régime de synchronisation atteint, le système AFCS peut piloter le doseur de carburant pour maintenir constant ou augmenter le régime de fonctionnement du deuxième moteur 3.

En parallèle de cette accélération 23, dès l'identification d'une panne du premier moteur et tant que le régime de fonctionnement du deuxième moteur 3 est inférieur au régime de synchronisation, le procédé d'assistance 20 comporte une étape de détection 24 périodique en vol de valeurs courantes d'au moins deux paramètres d'état avec les senseurs 13, 14.

Les senseurs 13, 14 sont reliés par voie filaire ou non filaire au contrôleur de pilotage automatique 8 et transmettent ainsi chacun des signaux analogiques ou numériques, électriques ou optiques, porteurs des valeurs courantes respectives des au moins deux paramètres d'état. La détection 24 périodique permet alors de détecter et de transmettre selon un premier intervalle de temps prédéterminé ces valeurs courantes des au moins deux paramètres d'état.

Le procédé d'assistance 20 comporte une génération périodique 25 avec le contrôleur de pilotage automatique 8 d'ordres de commande pour commander les actionneurs 10 reliés aux organes aérodynamiques 6 et piloter le giravion 1 selon une phase de vol en autorotation.

Une telle génération périodique 25 des ordres de commande est ainsi également réalisée à selon un second intervalle de temps prédéterminé en fonction des variations des au moins deux paramètres d'état. Eventuellement les premier et second intervalles de temps peuvent être égaux.

Par ailleurs, une telle génération périodique 25 est mise en œuvre par contrôleur de pilotage automatique 8 qui détermine les ordres de commande en appliquant une loi de commande stockée dans une mémoire qui peut être indépendante ou comprise dans le contrôleur de pilotage automatique 8, ladite loi de commande étant fonction des au moins deux paramètres d'état pour générer les ordres de commande.

Avantageusement, le procédé d'assistance 20 peut également comporter un affichage 26 sur l'afficheur 11 des valeurs courantes desdits au moins deux paramètres d'état et/ou d'une information représentative d'une transmission des ordres de commande du contrôleur de pilotage automatique 8 vers les actionneurs 10.

Un tel afficheur 11 est ainsi relié par voie filaire ou non filaire au contrôleur de pilotage automatique 8 et reçoit des signaux analogiques ou numériques, électriques ou optiques, porteurs des valeurs courantes des au moins deux paramètres d'état et/ou d'une transmission des ordres de commande du contrôleur de pilotage automatique 8 vers les actionneurs 10 lorsque ladite génération périodique 25 des ordres de commande est mise en œuvre.

De même, un tel procédé d'assistance 20 peut éventuellement comporter une étape préliminaire de détermination 27 d'un type de mission ou de préférences. Une telle détermination 27 d'un type de mission peut par exemple être mise en œuvre au moyen du système de mission 15 qui transmet alors un signal représentatif du type de mission ou de préférences au contrôleur de pilotage automatique 8.

Une fois cette étape de détermination 27 mise en œuvre, le giravion 1 peut alors décoller et effectuer ou débuter sa mission.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé d'assistance (20) au pilotage d'un giravion (1) comportant un premier moteur (2) et un deuxième moteur (3) aptes à transmettre chacun, hors cas de panne, un couple moteur à au moins un rotor (4) assurant au moins une sustentation dudit giravion (1) dans l'air, ledit giravion (1) comportant des organes aérodynamiques (6) permettant de piloter ledit giravion (1), ledit procédé d'assistance (20) comportant les étapes suivantes :
• régulation (21) asymétrique du premier moteur (2) et dudit deuxième moteur (3), le premier moteur (2) fournissant seul une puissance motrice audit au moins un rotor (4), ledit deuxième moteur (3) fonctionnant selon un régime d'attente dans lequel ledit deuxième moteur (3) ne fournit aucune puissance motrice audit au moins un rotor (4),
• identification (22) d'une défaillance moteur dudit premier moteur (2) à l'aide d'un contrôleur de défaillance (7), et
• en présence d'une dite défaillance moteur dudit premier moteur (2), accélération (23) dudit deuxième moteur (3) depuis ledit régime d'attente jusqu'à un régime de synchronisation dans lequel ledit deuxième moteur (3) transmet seul la puissance motrice audit au moins un rotor (4),
**caractérisé en ce que**, suite à l'identification (22) de la défaillance moteur du premier moteur (2) et tant qu'un régime de fonctionnement dudit deuxième moteur (3) est inférieur audit régime de synchronisation, ledit procédé d'assistance (20) comporte les étapes suivantes :
• détection (24) périodique en vol de valeurs courantes d'au moins deux paramètres d'état au moyen d'au moins deux senseurs (13, 14) distincts, lesdits au moins deux paramètres d'état étant de natures distinctes et comportant un premier paramètre d'état représentatif d'une condition physico-chimique environnementale ou d'une position du giravion (1) par rapport à un environnement extérieur (EXT) et un deuxième paramètre d'état représentatif d'un fonctionnement dudit giravion (1), et
• génération périodique (25) avec un contrôleur de pilotage automatique (8) d'ordres de commande pour commander des actionneurs (10) reliés auxdits organes aérodynamiques (6) durant une phase de vol en autorotation pilotée automatiquement, ladite génération périodique (25) mettant en œuvre une loi de commande prédéterminée fonction desdits au moins deux paramètres d'état, ladite loi de commande prédéterminée étant spécifiquement applicable audit procédé d'assistance (20).

2. Procédé selon la revendication 1,
**caractérisé en ce que** ledit premier paramètre d'état est choisi parmi le groupe comportant une température de l'air, une pression atmosphérique, une altitude, une densité de l'air, une vitesse air dudit giravion (1) par rapport à l'air, une vitesse sol dudit giravion (1) par rapport au sol, une accélération verticale dudit giravion (1) par rapport au sol et une assiette dudit giravion (1) dans un repère terrestre.

3. Procédé selon l'une quelconque des revendications 1 à 2,
**caractérisé en ce que** ledit deuxième paramètre d'état est choisi parmi le groupe comportant une vitesse de rotation NR dudit au moins un rotor (4), une puissance transmise par ledit deuxième moteur (3) audit au moins un rotor (4), un couple moteur transmis par ledit deuxième moteur (3) audit au moins un rotor (4), une vitesse de rotation d'un générateur de gaz N1 dudit deuxième moteur (3), une vitesse de rotation N2 d'une turbine libre dudit deuxième moteur (3), une température TET des gaz à l'entrée d'une turbine haute pression d'un générateur de gaz dudit deuxième moteur (3) et une température T45 des gaz à l'entrée d'une turbine libre dudit deuxième moteur (3).

4. Procédé selon les revendications 2 et 3,
**caractérisé en ce que** ledit premier paramètre d'état est la vitesse air dudit giravion (1) par rapport à l'air et ledit deuxième paramètre d'état est la vitesse de rotation NR dudit au moins un rotor (4).

5. Procédé selon l'une quelconque des revendications 1 à 4,
**caractérisé en ce que** lesdits organes aérodynamiques (6) comportent des pales (9) dudit au moins un rotor (4), lesdits actionneurs (10) commandant au moins un pas desdites pales (9).

6. Procédé selon la revendication 5,
**caractérisé en ce que** lesdits ordres de commande sont transmis auxdits actionneurs (10) pour générer une diminution collective et identique d'un pas desdites pales (9) et/ou une modification cyclique dudit pas desdites pales (9).

7. Procédé selon l'une quelconque des revendications 1 à 6,
**caractérisé en ce que** ledit procédé d'assistance (20) comporte un affichage (26) sur un afficheur (11) d'au moins une information choisie parmi le groupe comportant lesdites valeurs courantes desdits au moins deux paramètres d'état et une information représentative d'une transmission desdits ordres de commande dudit contrôleur de pilotage automatique (8) vers lesdits actionneurs (10).

8. Programme d'ordinateur comprenant des instructions qui conduisent à mettre en œuvre le procédé d'assistance (20) selon l'une quelconque des revendications 1 à 7, lorsque ledit programme est exécuté par un système d'assistance au pilotage dudit giravion (1).

9. Giravion (1) comportant un premier moteur (2) et un deuxième moteur (3) aptes à transmettre chacun, hors cas de panne, un couple moteur à au moins un rotor (4) assurant au moins une sustentation dudit giravion (1) dans l'air,
**caractérisé en ce que** ledit giravion (1) comporte un système (12) d'assistance au pilotage dudit giravion (1) configuré pour mettre en œuvre le procédé d'assistance (20) selon l'une quelconque des revendications 1 à 7, ledit système (12) comportant ledit contrôleur de défaillance (7), ledit contrôleur de pilotage automatique (8), lesdits actionneurs (10) et lesdits au moins deux senseurs (13, 14).

## Patentansprüche

1. Verfahren zum Unterstützen (20) der Steuerung eines Drehflüglers (1) mit einem ersten Motor (2) und einem zweiten Motor (3), die in der Lage sind, jeweils außer im Falle einer Störung ein Drehmoment auf mindestens einen Rotor (4) zu übertragen, der mindestens einen Auftrieb des Drehflüglers (1) in der Luft gewährleistet, wobei der Drehflügler (1) aerodynamische Elemente (6) aufweist, die es ermöglichen, den Drehflügler (1) zu steuern, wobei das Verfahren zur Unterstützung (20) die folgenden Schritte umfasst:
• asymmetrisches Steuern (21) des ersten Motors (2) und des zweiten Motors (3), wobei der erste Motor (2) allein den mindestens einen Rotor (4) mit Antriebskraft versorgt und der zweite Motor (3) in einem Bereitschaftsbetrieb arbeitet, in dem er den mindestens einen Rotor (4) nicht mit Antriebskraft versorgt,
• Erkennen (22) einer Motorstörung des ersten Motors (2) mit Hilfe einer Störungssteuerung (7) und
• bei Vorliegen einer Motorstörung des ersten Motors (2) Beschleunigen (23) des zweiten Motors (3) aus dem Bereitschaftsbetrieb auf einen Synchronisationsbetrieb, in dem der zweite Motor (3) allein die Antriebsleistung auf den mindestens einen Rotor (4) überträgt,
**dadurch gekennzeichnet, dass** nach dem Erkennen (22) der Motorstörung des ersten Motors (2) und solange eine Betriebsdrehzahl des zweiten Motors (3) unterhalb der Synchronisationsdrehzahl liegt, das Unterstützungsverfahren (20) die folgenden Schritte umfasst:
• periodisches Erfassen (24) von aktuellen Werten mindestens zweier Zustandsparameter während des Fluges mittels mindestens zweier unterschiedlicher Sensoren (13, 14), wobei die mindestens zwei Zustandsparameter unterschiedlicher Art sind und einen ersten Zustandsparameter, der einen physikalisch-chemischen Zustand der Umgebung oder eine Position des Drehflüglers (1) in Bezug auf eine Außenumgebung (EXT) repräsentiert, und einen zweiten Zustandsparameter, der einen Betriebszustand des Drehflügelflugzeugs (1) repräsentiert, umfassen, und
• periodisches Erzeugen (25) von Steuerbefehlen zum Steuern von mit den aerodynamischen Elementen (6) verbundenen Stellgliedern (10) durch eine Autopilotsteuerung (8) während einer automatisch gesteuerten Autorotationsflugphase, wobei das periodische Erzeugen (25) eine vorgegebene Steuerregel in Abhängigkeit von den mindestens zwei Zustandsparametern umsetzt, wobei die vorgegebene Steuerregel speziell auf das Unterstützungsverfahren (20) anwendbar ist.

2. Verfahren nach Anspruch 1,
**dadurch gekennzeichnet, dass** der erste Zustandsparameter aus der Gruppe ausgewählt ist, die eine Lufttemperatur, einen Luftdruck, eine Flughöhe, eine Luftdichte, eine Luftgeschwindigkeit des Drehflüglers (1) relativ zur Luft, eine Bodengeschwindigkeit des Drehflüglers (1) relativ zum Boden, eine vertikale Beschleunigung des Drehflüglers (1) relativ zum Boden und eine Trimmung des Drehflüglers (1) in einem Erdbezugssystem umfasst.

3. Verfahren nach einem der Ansprüche 1 bis 2,
**dadurch gekennzeichnet, dass** der zweite Zustandsparameter aus der Gruppe ausgewählt ist, die eine Drehzahl NR des mindestens einen Rotors (4), eine von dem zweiten Motor (3) auf den mindestens einen Rotor (4) übertragene Leistung, ein vom zweiten Motor (3) auf den mindestens einen Rotor (4) übertragenes Drehmoment, eine Drehzahl eines Gasgenerators N1 des zweiten Motors (3), eine Drehzahl N2 einer Freilaufturbine des zweiten Motors (3), eine Temperatur TET der Gase am Eingang einer Hochdruckturbine eines Gasgenerators des zweiten Motors (3) und eine Temperatur T45 der Gase am Eingang einer Freilaufturbine des zweiten Motors (3) umfasst.

4. Verfahren nach den Ansprüchen 2 und 3,
**dadurch gekennzeichnet, dass** der erste Zustandsparameter die Luftgeschwindigkeit des Drehflügelflugzeugs (1) relativ zur Luft ist und der zweite Zustandsparameter die Drehzahl NR des mindestens einen Rotors (4) ist.

5. Verfahren nach einem der Ansprüche 1 bis 4,
**dadurch gekennzeichnet, dass** die aerodynamischen Elemente (6) Blätter (9) des mindestens einen Rotors (4) umfassen, wobei die Aktuatoren (10) mindestens einen Anstellwinkel der Blätter (9) steuern.

6. Verfahren nach Anspruch 5,
**dadurch gekennzeichnet, dass** die Steuerbefehle an die Aktuatoren (10) übertragen werden, um eine kollektive und identische Verringerung eines Anstellwinkels der Blätter (9) und/oder eine zyklische Änderung des Anstellwinkels der Blätter (9) zu bewirken.

7. Verfahren nach einem der Ansprüche 1 bis 6,
**dadurch gekennzeichnet, dass** das Verfahren zum Unterstützen (20) ein Anzeigen (26) mindestens einer Information, die aus der Gruppe ausgewählt ist, die die aktuellen Werte der mindestens zwei Zustandsparameter und eine Information umfasst, die eine Übertragung der Steuerbefehle von der Autopilotsteuerung (8) an die Aktuatoren (10) darstellt, auf einer Anzeige (11) umfasst.

8. Computerprogramm mit Anweisungen, die bewirken, dass das Unterstützungsverfahren (20) nach einem der Ansprüche 1 bis 7 durchgeführt wird, wenn das Programm von einem Flugassistenzsystem des Drehflüglers (1) ausgeführt wird.

9. Drehflügler (1) mit einem ersten Motor (2) und einem zweiten Motor (3), die in der Lage sind, jeweils außer im Falle einer Störung ein Drehmoment auf mindestens einen Rotor (4) zu übertragen, der mindestens einen Auftrieb des Drehflüglers (1) in der Luft gewährleistet,
**dadurch gekennzeichnet, dass** der Drehflügler (1) ein Steuerungssystem (12) für den Drehflügler (1) umfasst, das konfiguriert ist, um das Unterstützungsverfahren (20) nach einem der Ansprüche 1 bis 7 durchzuführen, wobei das System (12) die Störungssteuerung (7), die Autopilotsteuerung (8), die Aktuatoren (10) und die mindestens zwei Sensoren (13, 14) umfasst.

## Claims

1. Method (20) for assisting with the piloting of a rotorcraft (1) comprising a first engine (2) and a second engine (3) each capable, in the absence of a failure, of transmitting an engine torque to at least one rotor (4) ensuring at least to keep said rotorcraft (1) in the air, said rotorcraft (1) comprising aerodynamic members (6) making it possible to pilot said rotorcraft (1), said assistance method (20) comprising the following steps:
• asymmetrically regulating (21) the first engine (2) and said second engine (3), the first engine (2) individually providing an engine power to said at least one rotor (4), said second engine (3) operating according to a standby speed in which said second engine (3) does not provide any engine power to said at least one rotor (4),
• identifying (22) an engine failure of said first engine (2) using a failure controller (7), and
• in the presence of a said engine failure of said first engine (2), accelerating (23) said second engine (3) from said standby speed up to a synchronisation speed in which said second engine (3) individually transmits the engine power to said at least one rotor (4),
**characterised in that**, after identifying (22) the engine failure of the first engine (2) and as long as an operating speed of said second engine (3) is less than said synchronisation speed, said assistance method (20) comprises the following steps:
• periodically detecting (24), in flight, current values of at least two state parameters by means of at least two distinct sensors (13, 14), said at least two state parameters being different in nature and comprising a first state parameter representing an environmental physico-chemical condition or a position of the rotorcraft (1) with respect to an external environment (EXT) and a second state parameter representing an operation of said rotorcraft (1), and
• periodically generating (25), with an automatic piloting controller (8), control orders to control actuators (10) connected to said aerodynamic members (6) during an automatically piloted flight phase in autorotation, said periodic generation (25) implementing a predetermined control law according to said at least two state parameters, said predetermined command law being specifically applicable to said assistance method (20).

2. Method according to claim 1,
**characterised in that** said first state parameter is chosen from among the group comprising an air temperature, an atmospheric pressure, an altitude, an air density, an air speed of said rotorcraft (1) with respect to the air, a ground speed of said rotorcraft (1) with respect to the ground, a vertical acceleration of said rotorcraft (1) with respect to the ground and an attitude of said rotorcraft (1) in a land reference.

3. Method according to any one of claims 1 to 2,
**characterised in that** said second state parameter is chosen from among the group comprising a rotation speed NR of said at least one rotor (4), a power transmitted by said second engine (3) to said at least one rotor (4), an engine torque transmitted by said second engine (3) to said at least one rotor (4), a rotation speed of a gas generator N1 of said second engine (3), a rotation speed N2 of a free turbine of said second engine (3), a temperature TET of the gases at the inlet of a high-pressure turbine of a gas generator of said second engine (3) and a temperature T45 of the gases at the inlet of a free turbine of said second engine (3).

4. Method according to claims 2 and 3,
**characterised in that** said first state parameter is the air speed of said rotorcraft (1) with respect to the air and said second state parameter is the rotation speed NR of said at least one rotor (4).

5. Method according to any one of claims 1 to 4,
**characterised in that** said aerodynamic members (6) comprise blades (9) of said at least one rotor (4), said actuators (10) controlling at least one pitch of said blades (9).

6. Method according to claim 5,
**characterised in that** said control orders are transmitted to said actuators (10) to generate a collective and identical decrease of a pitch of said blades (9) and/or a cyclic modification of said pitch of said blades (9).

7. Method according to any one of claims 1 to 6,
**characterised in that** said assistance method (20) comprises a display (26) on a display unit (11) of at least one piece of information chosen from among the group comprising said current values of said at least two state parameters and a piece of information representative of a transmission of said control orders of said automatic piloting controller (8) to said actuators (10).

8. Computer program comprising instructions which lead to implementing the assistance method (20) according to any one of claims 1 to 7, when said program is executed by a system for assisting with the piloting of said rotorcraft (1).

9. Rotorcraft (1) comprising a first engine (2) and a second engine (3) each capable of transmitting, in the absence of a failure, an engine torque to at least one rotor (4) ensuring at least to keep said rotorcraft (1) in the air,
**characterised in that** said rotorcraft (1) comprises a system (12) for assisting with the piloting of said rotorcraft (1) configured to implement the assistance method (20) according to any one of claims 1 to 7, said system (12) comprising said failure controller (7), said automatic piloting controller (8), said actuators (10) and said at least two sensors (13, 14).
